Europäisches Patentamt

(19) European Patent Office

Office européen des brevets

(11) Publication number: **0 254 350 B1**

(12) **EUROPEAN PATENT SPECIFICATION**

(45) Date of publication of patent specification :
09.01.91 Bulletin 91/02

(51) Int. Cl.⁵ : **A01B 29/04, A01B 49/02**

(21) Application number : 87201304.0

(22) Date of filing : 09.07.87

(54) A soil cultivating machine.

(30) Priority : 14.07.86 NL 8601828

(43) Date of publication of application :
27.01.88 Bulletin 88/04

(45) Publication of the grant of the patent :
09.01.91 Bulletin 91/02

(84) Designated Contracting States :
DE FR GB IT NL

(56) References cited :
DE-A- 3 431 333
DE-A- 3 513 797

(73) Proprietor : C. van der Lely N.V.
Weverskade 10 P.O. Box 26
NL-3155 ZG Maasland (NL)

(72) Inventor : Van der Lely, Ary
10A, Weverskade
NL-3155 ZG Maasland (NL)
Inventor : Bom, Cornelis Johannes Gerardus
16, Laan van Nieuw Rozenburg
NL-3181 VC Rozenburg (NL)

(74) Representative : Mulder, Herman et al
Octrooibureau Van der Lely N.V. Weverskade
10 P.O. Box 26
NL-3155 ZG Maasland (NL)

## Description

The invention concerns a soil cultivating machine comprising a frame portion wherein a plurality of power-driven soil working members are supported in side-by-side relationship, whilst behind said soil working members there is arranged by means of pivotal arms a roller which, during operation, is movable relative to said frame portion about an at least substantially horizontal transverse axis and is afforded by a packer roller provided with scraper elements disposed at the rear thereof by means of a carrier and means are provided with the aid of which the carrier with the scraper elements is movable, during operation, in at least one direction relative to the arms for the roller.

With soil cultivating machines of the above-defined type, as known from the German patent application 3.431.333, the frame portion carrying the soil working members can move upwardly relative to the arms and the roller about the pivotal axis for the arms when the soil working members hit an obstacle in the soil, so that damage to the soil working members is prevented.

However, in practice it has been found that with the known construction, when a soil working member remote from the centre hits an obstacle, the upward movement of the frame portion via the arms can be counter-acted by the carrier carrying the packer roller's movable scraper elements, it then even being possible for the roller to be lifted partly from the soil. This means that for the soil working members of the prior art construction there is not always a sufficient protection against damage when they hit obstacles in the soil.

Now, by means of the construction according to the invention, this disadvantage can be obviated in that the means include a connecting element arranged between the frame portion and the carrier for the scraper elements and with the aid of which the position of the scraper elements relative to the cylindrical carrier of the roller is adjusted upon an adjustment in height of the roller with respect to the frame portion. Using this provision, the carrier for the scraper elements, when the frame portion deflects upwardly, can perform a relative movement with respect to the roller arms, as a result of which the upward movement of the frame portion is not impeded anymore.

For a better understanding of the present invention and to show how the same may be carried into effect, reference will now be made, by way of example, to the accompanying drawings, in which :

Figure 1 is a plan view of a soil cultivating machine having a construction according to the invention ;

Figure 2 is a view taken in the direction of the arrow II in Figure 1 ;

Figure 3 is a plan view of part of a machine in accordance with a second embodiment according to the invention ;

Figure 4 is a view taken in the direction of the arrow IV in Figure 3 ;

Figure 5 is a view in accordance with Figure 4 of a third embodiment of a construction according to the invention, and

Figure 6 is a view in accordance with Figure 4 of a fourth embodiment of a construction according to the invention.

The implement shown in the drawings concerns a soil cultivating machine, in particular one for the preparation of a seed bed.

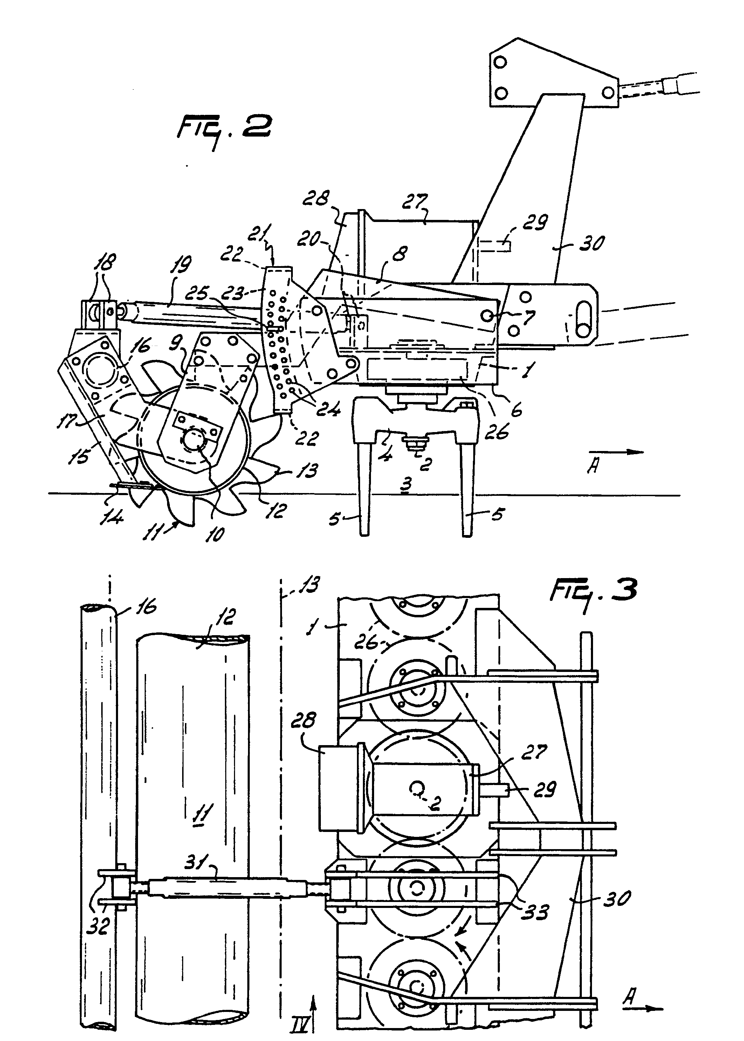

The machine comprises a box-like frame portion 1 which extends transversely to the direction of operative travel A and in which are supported, spaced apart equidistantly by preferably 25 cms, the upwardly, preferably vertically, extending shafts 2 of soil working members 3. Each of the soil working members 3 includes an at least substantially horizontal carrier 4 which is mounted on that end of the shaft 2 projecting from the bottom of the frame portion 1 and whose ends are provided with downwardly extending soil working elements 5 in the form of tines. The ends of the box-like frame portion 1 are closed by means of plates 6 which extend at least substantially parallel to the direction of operative travel A. Each of the plates 6 is provided near its front upper side with a bolt 7 which extends transversely to the direction of operative travel A and about which is freely pivotal an arm 8 extending rearwardly along the inner side of a plate 6. Each of the arms 8 has at its rear end a plate-shaped support 9 extending obliquely downwardly and rearwardly. Near the lower side, each of the supports 9 has a stub 10 extending transversely to the direction of operative travel A, the arrangement being such that the longitudinal centre lines thereof are in alignment. On the stubs 10 there is arranged freely rotatably a roller 11, which roller is designed as a packer roller. The packer roller 11 includes a cylindrical carrier 12 on which there are arranged equidistantly crowns of cams 13. Plate-shaped scraper elements 14 are provided between the crowns of cams 13. During operation, the scraper elements 14 assume a position as shown in detail in Figure 2, the free front end of a scraper element being located at least substantially near the lower side of the cylindrical carrier 12 bearing on the soil. Each of the plate-shaped scraper elements 14 is disposed at the lower side of an obliquely upwardly and rearwardly directed arm 15. The arms 15 are mounted on a carrier 16 which extends transversely to the direction of operative travel A and is positioned at least substantially parallel to the axis of rotation of the roller 11. By means of an arm 17 extending obliquely downwardly and subsequently forwardly (Figure 2), the ends of the carrier 16 are freely pivotal about the stubs 10 carrying the roller 11.

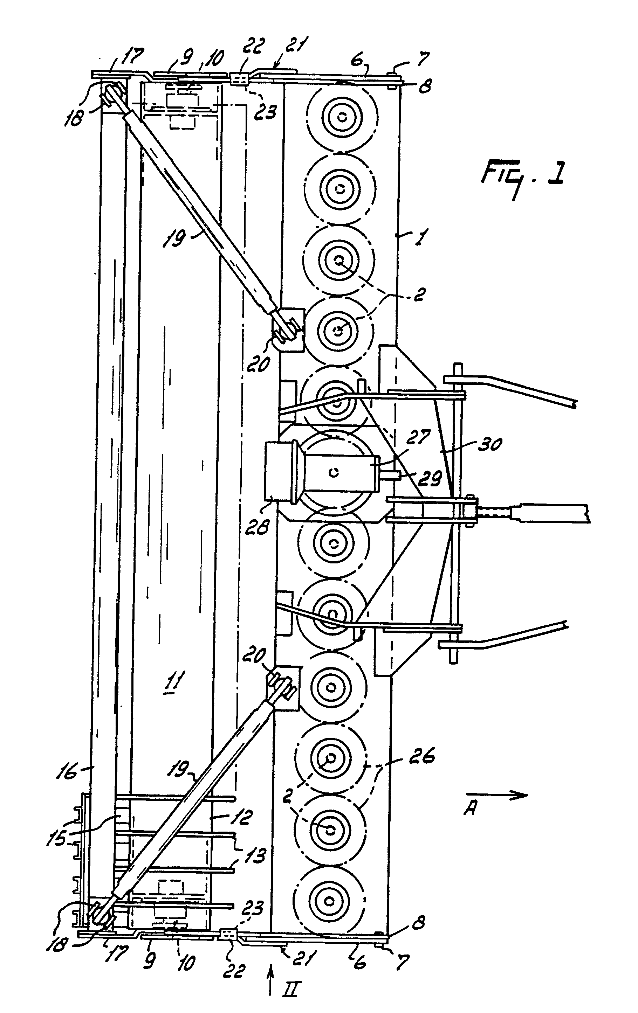

Near the ends, the carrier 16 (Figure 1) is provided at its upper side with two spaced-apart lugs 18, between which one end of a connecting element 19 in the form of a rod is disposed freely movably to all sides by means of a ball and socket joint, the other end being arranged freely movably to all sides by means of a ball and socket joint between two lugs 20 at the rear side of the frame portion 1. The lugs 20 at the rear side of the frame portion 1 are located in the region of a fourth soil working member 3, taken from an end of the frame portion 1. The respective connecting elements 19, which are adjustable in length, are provided such that, in plan view, they enclose an angle of approximately 50° to the direction of operative travel A of the machine. The rear side of each of the plates 6 is provided with a support 21 which at the upper and lower sides has a portion 22 which is folded at a square angle. The portion 22 extends at least substantially horizontally, is directed inwardly and serves as a stop adapted to co-operate with an arm 8. The portions 22 are interconnected by a strip 23, the arrangement being such that the arm 8 is capable of movement between the strip 23 at the support 21. The support 21 and the strip 23 have curved rear sides, the arrangement being such that the curvature extends in accordance with a section of a circle having its centre on the longitudinal centre line of a bolt 7. The rear side of the support 21 and the strip 23 are both provided between the portions 22 with two interspaced rows of holes 24, which extend parallel to the rear side of the support and the strip, respectively, and in one of which a pin 25 can be inserted, the arrangement being such that in operation of the machine the pin bears on the upper side of the arm 8, so that the working depth of the soil working members 3 is determined by means of the roller 11. Inside the box-like frame portion 1, each shaft 2 is provided with a pinion 26, the arrangement being such that the pinions on the shafts of adjacent soil working members 3 are in driving connection with each other. Near the centre, the shaft 2 of a soil working member 3 is extended upwardly and by means of this extension reaches to into a gear box 27, inside which the extension is in driving connection via a conical gear wheel transmission and a speed variator 28, located at the rear side of the gear box, with a shaft 29 which extends in the direction of operative travel A and projects at the front side from said gear box 27. The end of the shaft projecting from the gear box can be coupled to the power take-off shaft of a tractor via an intermediate shaft. Near its front end, the frame portion 1 includes near its centre a trestle 30 for coupling of the machine to the three-point lifting hitch of a tractor.

The machine described in the foregoing operates as follows :

During operation, the machine coupled to the three-point lifting hitch of a tractor via the trestle can be moved in a direction indicated by the arrow A, whereby each of the soil working members 3 can be rotated from the power take-off shaft via the intermediate shaft and the above-described transmission, the arrangement being such that adjacent soil working members rotate in opposite direction and, by means of their downwardly directed soil working members 5, cultivate at least adjoining strips of soil.

As has already been observed, the working depth of the soil working members 3 can be set with the aid of the roller 11 by introducing the pin 25 in one of the holes 24, the arrangement being such that the pin bearing on the upper side of the arms 8 prevents the frame portion 1 supporting the soil working members from moving downwardly to a further extent.

With the aid of the scraper elements 14 disposed at the rear side of the roller 11 by means of the carrier 16 and the arms 15 it is possible, during operation, to scrape-off in a very early stage the earth caught between the crowns of cams 13, thus preventing clods of undesired size from being deposited on the seed bed to be prepared. If, during operation, one or more of the soil working members 3 hits/ hit an obstacle in the soil, the box-like frame portion 1 is capable of deflecting upwardly relative to the roller 11 and the arms 8 about the bolt 7. In this situation, this upward deflection is not impeded by the presence of the carrier 16 for the scraper elements 14, since this carrier is freely pivotal by means of the arms 17 about the stubs 10 which constitute a pivotal axis and at the same time an axis of rotation for the roller 11.

During operation, the connecting elements 19 ensure that the scraper elements 14 are retained in an appropriate position relative to the roller 11. If, for example, the box-like frame portion 1 is moved upwardly at one end because the soil working members 3 hit an obstacle in the soil, the connecting element 19 can effect a forward deflection of the carrier 16 for the scraper elements 14 about the pivotal axis 10, as a result of which the deflection of the box-like frame portion with the soil working members supported therein is not impeded.

Furthermore, the use of the connecting elements 19 accomplishes that, when the roller 11 is readjusted relative to the box-like frame portion 1 for setting the working depth, the position of the scraper elements 14 is adapted automatically to the new position. Thus, when the roller moves downwardly relative to the frame portion, i.e. to a position of the roller for working less deeply, the connecting elements 19 pivot the carrier 16 via the arms 17 to such an extent about the pivotal axis 10 that the scraper elements 14 move upwardly along the periphery of the cylindrical carrier 12.

When the roller moves upwardly relative to the frame portion, i.e. the setting of a deeper working depth, the relative movement between the roller 11 and the frame portion 1 ensures that the connecting elements 19 pivot the carrier 16 via the arms 17 to such an extent about the pivotal axis 10 that the scraper elements 14 move downwardly. The position of the scraper elements can be changed further by changing the length of the connecting elements 19.

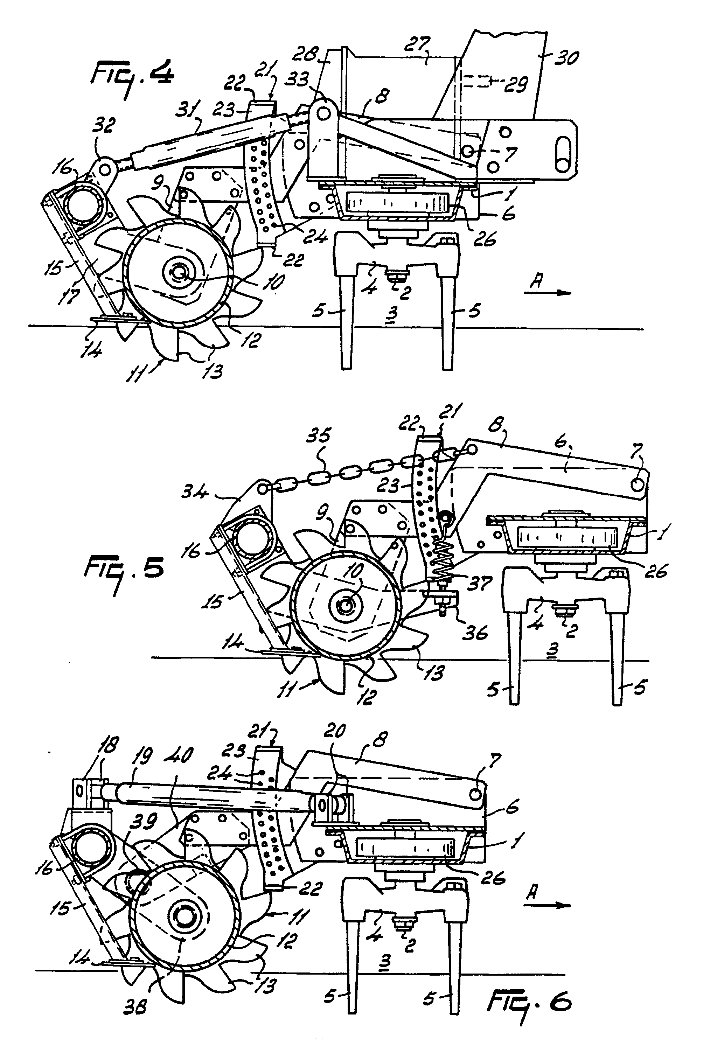

Figures 3 and 4 show an embodiment wherein only one connecting element 31 is present between the vertically movable frame portion 1 and the carrier 16 carrying the scraper elements 14. In this situation, the connecting element 31 is provided between lugs 32 near the centre of the carrier 16 and supports 33 near the centre at the upper side of the frame portion 1. With this construction, the ends of the carrier 16 are given a maximum freedom of movement, as a result of which the frame portion 1 is given a maximum freedom of movement when meeting obstacles in the soil, in particular if these obstacles hit the soil working members at the ends of said frame portion. The length of the connecting element 31 is also adjustable. Also with this construction, an automatic adaptation of the position of the scraper elements is obtained when the roller 11 is adjusted in height.

Figure 5 illustrates an embodiment wherein a flexible connecting element 35 in the form of a chain is provided between a lug 34 at the ends of the carrier 16 for the scraper elements 14 and the upper side of an arm. The lower ends of the arms 17 for the carrier 16 have a forwardly directed support 36 which by means of a tension spring 37 is connected to the lower side of an arm 8, the arrangement being such that, during normal operation, the flexible connecting element 35 is kept under tension. Also in this embodiment, in the event the frame portion deflects, said frame portion can move independently of the carrier 16 for the scraper elements 14, so that said carrier does not impede any movement of the frame portion in height. Furthermore in this embodiment, there is provided also an automatic adaptation of the position of the scraper elements upon readjustment of the roller. It is also possible for the length of the connecting element to be adjustable.

In the embodiment illustrated in Figure 6, an arm 38 for the carrier 16 is arranged pivotally near the centre by means of a shaft 39 at the lower side of a support 40 of an arm 8. In this embodiment, the roller 11 and the carrier 16 can be pivoted together about the pivotal shaft 39. The ends of the carrier 16 or its centre may be connected to the frame portion 1, or to the ends of the arms 8, by means of a connecting element described in the foregoing. The respective arms 8 and 38 have such a recessed portion for accommodating, respectively, the stubs 10 and the pivotal shaft 39 that they are contained in said recessed portion with some play. This accomplishes that, when the frame portion 1 is moved upwardly, there is ample freedom of movement between the respective arms 8 and 38 and the respective stubs 10 and shaft 39. Using the construction described in the foregoing, it is achieved that means constituted by the respective pivotal shafts and connecting elements are present, by means of which upon upward movement of the frame portion 1 the carrier 16 for the scraper elements 14, when a soil working member 3 hits an obstacle in the soil, cannot obstruct this movement, when the frame portion moves upwardly, the carrier 16 can effect a relative movement with respect to the arms 8 to which the roller 11 is connected. Thus, even if an obstacle hits the soil working members at the ends of the frame portion, an effective upward movement of the frame portion is possible.

## Claims

1. A soil cultivating machine comprising a frame portion (1) wherein a plurality of power-driven soil working members (3) are supported in side-by-side relationship, whilst behind said soil working members (3) there is arranged by means of pivotal arms (8) a roller (11) which, during operation, is movable relative to said frame portion about an at least substantially horizontal transverse axis (7) and is afforded by a packer roller provided with scraper elements (14) disposed at the rear thereof by means of a carrier (16), and means are provided with the aid of which the carrier (16) with the scraper elements (14) is movable, during operation, in at least one direction relative to the arms (8) for the roller (11), characterized in that the means include a connecting element (19, 31, 35) arranged between the frame portion (1) and the carrier (16) for the scraper elements (14) and with the aid of which the position of the scraper elements (14) relative to the cylindrical carrier (12) of the roller (11) is adjusted upon an adjustment in height of the roller (11) with respect to the frame portion (1).

2. A soil cultivating machine as claimed in claim 1, characterized in that the means also include at least one pivotal shaft (10, 39), with the aid of which the carrier (16) for the scraper elements (14) is pivotal with respect to the arms (8) supporting the roller (11).

3. A soil cultivating machine as claimed in claim 2, characterized in that the pivotal shaft (10, 39) extends at least substantially transversely to the direction of operative travel (A) of the machine and at least substantially horizontally.

4. A soil cultivating machine as claimed in any one of the preceding claims, characterized in that a pivotal shaft (10, 39) for the said carrier (16) is provided near each of the ends of the cylindrical carrier (12) for the scraper elements (14).

5. A soil cultivating machine as claimed in any one of claims 2 to 4, characterized in that the pivotal shaft (10, 39) is disposed on the arm (8), with the aid of which the roller (11) is pivotal with respect to the frame portion (1).

6. A soil cultivating machine as claimed in any one of claims 2 to 5, characterized in that, during operation, the roller (11) together with the said carrier (16) is pivotal about the pivotal shaft (10, 39).

7. A soil cultivating machine as claimed in any one of claims 2 to 6, characterized in that the pivotal shaft (10) coincides with the axis of rotation of the roller (11).

8. A soil cultivating machine as claimed in any one of claims 2 to 6, characterized in that the pivotal shaft (39) is arranged between the axis of rotation (10) of the roller (11) and the carrier (16) for the scraper elements (14).

9. A soil cultivating machine as claimed in any one of claims 2 to 8, characterized in that the pivotal shaft (10, 39) is constituted by a stud which is accommodated with clearance in a recessed portion in a support (9, 40) for the roller (11).

10. A soil cultivating machine as claimed in any one of claims 1 to 9, characterized in that the means include a rigid connecting element (19, 31) disposed between one end of the said carrier (16) and a point between the ends of the frame portion (1) supporting the soil working members (3).

11. A soil cultivating machine as claimed in claim 10, characterized in that the said connecting element (19) extends at an angle of approximately 50° to the direction of operative travel (A) of the machine.

12. A soil cultivating machine as claimed in any one of claims 1 to 9, characterized in that there is provided one single connecting element (31) disposed near the centre of the said carrier (16) and the said frame portion (1).

13. A soil cultivating machine as claimed in any one of claims 10 to 12, characterized in that the ends of the said connecting element (19, 31) are arranged for a movability to all sides with respect to the said carrier (16) and to the said frame portion (1), respectively.

14. A soil cultivating machine as claimed in any one of claims 10 to 13, characterized in that the length of the said connecting element (19, 31) is adjustable.

15. A soil cultivating machine as claimed in any one of claims 1 to 9, characterized in that the means include a flexible connecting element (35) arranged between the said carrier (16) and the arms (18) for the roller (11).

16. A soil cultivating machine as claimed in claim 15, characterized in that there is provided a spring-loaded mechanism, with the aid of which the flexible element (35) is kept under tension during operation.

17. A soil cultivating machine as claimed in claim 16, characterized in that the spring-loaded mechanism includes a tension spring (37) which is connected to the said carrier (16) and is disposed in front of the axis of rotation of the roller (11) with respect to the direction of operative travel (A).

## Ansprüche

1. Bodenbearbeitungsmaschine mit einem Gestellteil (1), an dem mehrere nebeneinander angeordnete, zwangläufig angetriebene Bodenbearbeitungs-Einheiten (3) abgestützt sind, hinter denen mittels schwenkbarer Arme (8) eine Walze (11) angeordnet ist, die im Betrieb relativ zu dem Gestellteil um eine im wesentlichen horizontale Achse (7) beweglich und als Packerwalze ausgeführt ist, an deren Rückseite Abstreifer (14) mittels eines Trägers (16) angeordnet sind, der im Betrieb zusammen mit den Abstreifern (14) in mindestens einer Richtung relativ zu den Armen (8) der Walze (11) mittels einer Vorrichtung bewegbar ist, dadurch gekennzeichnet, daß die Vorrichtung ein Verbindungselement (19, 31, 35) aufweist, das zwischen dem Gestellteil (1) und dem Träger (16) der Abstreifer (14) angeordnet ist und durch welche die Position der Abstreifer (14) in bezug auf den zylindrischen Tragkörper (12) der Walze (11) durch Höhenverstellen der Walze (11) relativ zum Gestellteil (1) einstellbar ist.

2. Bodenbearbeitungsmaschine nach Anspruch 1, dadurch gekennzeichnet, daß die Vorrichtung außerdem eine Schwenkachse (10, 39) aufweist, durch die der Trä ger (16) der Abstreifer (14) relativ zu den die Walze (11) tragenden Armen (8) schwenkbar ist.

3. Bodenbearbeitungsmaschine nach Anspruch 2, dadurch gekennzeichnet, dass sich die Schwenkachse (10, 39) im wesentlichen horizontal und quer zur Arbeitsrichtung (A) der Maschine erstreckt.

4. Bodenbearbeitungsmaschine nach einem der vorhergehenden Ansprüche, dadurch gekennzeichnet, dass in der Nähe der Enden des zylindrischen Tragkörpers (12) eine Schwenkachse (10, 39) für den Träger (16) der Abstreifer (14) vorgesehen ist.

5. Bodenbearbeitungsmaschine nach einem der Ansprüche 2 bis 4, dadurch gekennzeichnet, dass die Schwenkachse (10, 39) an dem Arm (8) angeordnet ist, über den die Walze (11) relativ zu dem Gestellteil (1) schwenkbar ist.

6. Bodenbearbeitungsmaschine nach einem der Ansprüche 2 bis 5, dadurch gekennzeichnet, dass die Walze (11) im Betrieb zusammen mit dem Träger (16) um die Schwenkachse (10, 39) schwenkbar ist.

7. Bodenbearbeitungsmaschine nach einem der Ansprüche 2 bis 6, dadurch gekennzeichnet, dass die Schwenkachse (10) mit der Drehachse der Walze (11) zusammenfällt.

8. Bodenbearbeitungsmaschine nach einem der Ansprüche 2 bis 6, dadurch gekennzeichnet, daß die Schwenkachse (39) zwischen der Drehachse (10) der Walze (11) und dem Träger (16) der Abstreifer (14) angeordnet ist.

9. Bodenbearbeitungsmaschine nach einem der Ansprüche 2 bis 8, dadurch gekennzeichnet, daß die Schwenkachse (10, 39) durch einen Bolzen gebildet ist, der mit Spiel in einer Ausnehmung eines Trägers (9, 40) der Walze (11) liegt.

10. Bodenbearbeitungsmaschine nach einem der Ansprüche 1 bis 9, dadurch gekennzeichnet, daß die Vorrichtung ein starres Verbindungselement (19, 31) aufweist, das zwischen einem Ende des Trägers (16) und einem Punkt angeordnet ist, der sich zwischen den Enden des die Bodenbearbeitungs-Einheiten tragenden Gestellteiles (1) befindet.

11. Bodenbearbeitungsmaschine nach Anspruch 10, dadurch gekennzeichnet, daß sich das Verbindungsglied (19) im Winkel von etwa 50° zur Arbeitsrichtung (A) der Maschine erstreckt.

12. Bodenbearbeitungsmaschine nach einem der Ansprüche 1 bis 9, dadurch gekennzeichnet, daß ein einziges Verbindungselement (31) vorgesehen ist, das nahe der Mitte des Trägers (16) und des Gestellteiles (1) angeordnet ist.

13. Bodenbearbeitungsmaschine nach einem der Ansprüche 10 bis 12, dadurch gekennzeichnet, daß die Enden des Verbindungselementes (19, 31) in bezug auf den Träger (16) bzw. das Gestellteil (1) allseits beweglich sind.

14. Bodenbearbeitungsmaschine nach einem der Ansprüche 10 bis 13, dadurch gekennzeichnet, daß die Länge des Verbindungselementes (19, 31) einstellbar ist.

15. Bodenbearbeitungsmaschine nach einem der Ansprüche 1 bis 9, dadurch gekennzeichnet, daß die Vorrichtung ein flexibles Verbindungselement (35) aufweist, das zwischen dem Träger (16) und den Armen (18) der Walze (11) angeordnet ist.

16. Bodenbearbeitungsmaschine nach Anspruch 15, dadurch gekennzeichnet, daß das flexible Element (35) mittels eines federbelasteten Mechanismus im Betrieb unter Spannung gehalten ist.

17. Bodenbearbeitungsmaschine nach Anspruch 16, dadurch gekennzeichnet, daß der federbelastete Mechanismus eine Zugfeder (37) enthält, die mit dem Träger (16) verbunden und in bezug auf die Arbeitsrichtung (A) vor der Drehachse der Walze (11) angeordnet ist.

**Revendications**

1. Machine pour cultiver le sol comprenant une partie de chassis (1) dans laquelle une pluralité d'organes motorisés (3) pour travailler le sol sont soutenus en étant disposés côte à côte, tandis que derrière lesdits organes de travail du sol (3) est disposé, au moyen de bras pivotants (8), un rouleau (11) qui est mobile, au cours du travail, par rapport à ladite partie de chassis (1) autour d'un axe transversal (7) au moins sensiblement horizontal et qui est constitué d'un rouleau compacteur avec des éléments râcleurs (14) disposés à l'arrière de celui-ci au moyen d'un élément porteur (16), des moyens étant prévus à l'aide desquels l'élément porteur (16) avec les éléments râcleurs (14) est mobile, au cours du travail dans au moins une direction par rapport aux bras (8) pour le rouleau, **caractérisée** en ce que lesdits moyens comprennent un élément de liaison (19, 31, 35) disposé entre la partie de chassis (1) et l'élément porteur (16) des éléments râcleurs (14) et avec l'aide duquel la position des éléments râcleurs (14) par rapport à l'élément porteur cylindrique (12) du rouleau (11) est réglée lors d'un réglage en hauteur du rouleau (11) par rapport à la partie de chassis (1).

2. Machine pour cultiver le sol selon la revendication 1, caractérisée en ce que lesdits moyens comportent aussi au moins un arbre de pivotement (10, 39) à l'aide duquel l'élément porteur (16) des éléments râcleurs (14) est monté pivotant par rapport aux bras (8) supportant le rouleau (11).

3. Machine pour cultiver le sol selon la revendication 2, caractérisée en ce que l'arbre de pivotement (10, 39) s'étend au moins sensiblement transversalement au sens de marche (A) prévu pour le travail de la machine et est au moins sensiblement horizontal.

4. Machine pour cultiver le sol selon l'une quelconque des revendications précédentes, caractérisée en ce qu'un arbre de pivotement (10, 39) pour ledit élément porteur (16) est prévu près de chacune des extrémités de l'élément porteur cylindrique (12) des éléments râcleurs (14).

5. Machine pour cultiver le sol selon l'une quelconque des revendications 2 à 4, caractérisée en ce que l'arbre de pivotement (10, 39) est disposé sur le bras (8) à l'aide duquel le rouleau (11) est pivotant par rapport à la partie de chassis (1).

6. Machine pour cultiver le sol selon l'une quelconque des revendications 2 à 5, caractérisée en ce que, pendant le travail, le rouleau (11), ensemble avec ledit élément porteur (16), est pivotant autour de l'arbre de pivotement (10, 39).

7. Machine pour cultiver le sol selon l'une quelconque des revendications 2 à 6, caractérisée en ce que l'arbre de pivotement (10) coïncide avec l'axe de rotation du rouleau (11).

8. Machine pour cultiver le sol selon l'une quelconque des revendications 2 à 6, caractérisée en ce que l'arbre de pivotement (39) est disposé entre l'axe de rotation (10) du rouleau (11) et l'élément porteur (16) des éléments râcleurs (14).

9. Machine pour cultiver le sol selon l'une quelconque des revendications 2 à 8, caractérisée en ce que l'arbre de pivotement (10, 39) est constitué par un tourillon logé avec du jeu dans un renfoncement ménagé dans un support (9, 40) du rouleau (11).

10. Machine pour cultiver le sol selon l'une quelconque des revendications 1 à 9, caractérisée en ce que lesdits moyens comprennent un élément rigide de liaison (19, 31) disposé entre une extrémité dudit élément porteur (16) et un point situé entre les extrémités de la partie de chassis (1) supportant les organes de travail du sol (3).

11. Machine pour cultiver le sol selon la revendication 10, caractérisée en ce que ledit élément de liaison (19) s'étend avec un angle d'environ 50° par rapport au sens de marche (A) prévu pour le travail de la machine.

12. Machine pour cultiver le sol selon l'une quelconque des revendications 1 à 9, caractérisée en ce qu'il est prévu un seul élément de liaison (31) disposé près du milieu dudit élément porteur (16) et de ladite partie de chassis (1).

13. Machine pour cultiver le sol selon l'une quelconque des revendications 10 à 12, caractérisée en ce que les extrémités dudit élément de liaison (19, 31) sont agencées pour pouvoir se mouvoir de tous côtés par rapport audit élément porteur (16) et à ladite partie de chassis (1), respectivement.

14. Machine pour cultiver le sol selon l'une quelconque des revendications 10 à 13, caractérisée en ce que la longueur dudit élément de liaison (19, 31) est réglable.

15. Machine pour cultiver le sol selon l'une quelconque des revendications 1 à 9, caractérisée en ce que lesdits moyens comportent un élément flexible de liaison (35) disposé entre ledit élément porteur (16) et les bras (8) du rouleau (11).

16. Machine pour cultiver le sol selon la revendication 15, caractérisée en ce qu'il est prévu un mécanisme à ressort à l'aide duquel l'élément flexible (35) est maintenu en tension pendant le travail.

17. Machine pour cultiver le sol selon la revendication 16, caractérisée en ce que le mécanisme à ressort comporte un ressort de tension (37) qui est relié audit élément porteur (16) et qui est disposé en avant de l'axe de rotation du rouleau (11) par rapport au sens de marche (A) prévu pour le travail.

FIG. 1

FIG. 2

FIG. 3

FIG. 4

FIG. 5

FIG. 6